# EUROPEAN PATENT APPLICATION

(11) **EP 4 576 924 A1**
(43) Date of publication of application: **25.06.2025**
(21) Application number: 22955321.9
(22) Date of filing: 17.08.2022
(51) Int. Cl.: H04W 76/18, H04W 76/14

(54) **CONNECTION RELEASE METHOD AND APPARATUS, STORAGE MEDIUM AND CHIP**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/113163
(87) International publication number: WO 2024/036540

(57) **Abstract**

The present disclosure relates to a connection release method and apparatus, a storage medium and a chip. The method comprises: in response to triggering a connection release event, a first terminal can release a first sidelink connection established between the first terminal and a second terminal by means of a relay terminal, wherein the connection release event is used for instructing to release a second sidelink connection between the first terminal and the relay terminal. In this way, when the first terminal determines to release the second sidelink connection between the first terminal and the relay terminal, the first sidelink connection between the first terminal and the second terminal can be released, so that the first sidelink connection which can no longer be used for communication can be released in time, and resource occupation of the first terminal is reduced.

## Description

### TECHNICAL FIELD

The present disclosure relates to the field of communication technologies, and particularly to a connection release method and apparatus, a storage medium and a chip.

### BACKGROUND

With the development of wireless communication technologies, in order to achieve direct communication between user equipments (UEs), 3GPP (3rd Generation Partnership Project) defines sidelink (can be called direct link or side link) communication. For example, a typical application scenario for the sidelink communication is Vehicle-to-Everything (V2X). In Vehicle-to-Everything, each vehicle can be used as a UE, and UEs can communicate with each other via a sidelink, such as performing information transmission via a direct connection, thus effectively reducing a communication delay.

In a case that a distance between two UEs for the sidelink communication is far, the two UEs may communicate with each other via a relay UE (for example, a Relay UE). This communication mode is called U2U relay communication. In the U2U relay communication, two UEs that communicate with each other via a relay UE are called remote UEs or remote terminals. In related technologies, there may be problems that the sidelink connection of remote UEs cannot be released in time, which occupies terminal resources and affects data transmission efficiency.

### SUMMARY

To overcome the above problems in related technologies, the present disclosure provides a connection release method and apparatus, a storage medium and a chip.

In a first aspect of embodiments of the present disclosure, a connection release method is provided. The method is performed by a first user equipment (UE), and includes:

releasing a first sidelink connection established between the first UE and a second UE via a relay UE in response to triggering a connection release event; in which the connection release event indicates to release a second sidelink connection between the first UE and the relay UE.

In some embodiments, the method further includes:
releasing the second sidelink connection between the first UE and the relay UE.

In some embodiments, releasing the second sidelink connection between the first UE and the relay UE includes:

instructing, through an access layer of the first UE, an upper layer of the first UE to release the second sidelink connection.

In some embodiments, releasing the first sidelink connection established between the first UE and the second UE via the relay UE includes:

transmitting a first release parameter to an upper layer of the first UE through an access layer of the first UE; wherein the first release parameter is configured for instructing the upper layer to release the first sidelink connection.

In some embodiments, the first release parameter comprises a preset release cause parameter for indicating an interruption of the second sidelink connection between the first UE and the relay UE.

In some embodiments, the connection release event includes:
the access layer receiving target release indication information from the upper layer; wherein the target release indication information indicates the access layer to release the second sidelink connection.

In some embodiments, the connection release event includes:
a sidelink radio link failure occurring on the second sidelink connection between the first UE and the relay UE.

In some embodiments, the connection release event includes:

receiving target indication information transmitted by the relay UE; wherein the target indication information indicates an interruption of a third sidelink connection between the relay UE and the second UE.

In some embodiments, the target indication information includes a first indication for indicating that a sidelink radio link failure occurs on the third sidelink connection between the relay UE and the second UE.

In some embodiments, the target indication information includes a second indication for indicating that the third sidelink connection between the relay UE and the second UE is released.

In some embodiments, there are a plurality of second UEs, and the connection release event includes:
receiving the target indication information transmitted by the relay UE, and determining that each of sidelink connections between the plurality of second UEs that maintain sidelink connections with the first UE via the relay UE and the relay UE is interrupted according to the target indication information.

In a second aspect of the embodiments of the present disclosure, a connection release method is provided. The method is performed by a relay UE, and includes:
in a case that a third sidelink connection between the relay UE and a second UE is interrupted, transmitting target indication information to a first UE so that the first UE releases a first sidelink connection established between the first UE and the second UE via the relay UE in response to receiving the target indication information, in which the target indication information indicates an interruption of the third sidelink connection between the relay UE and the second UE.

In some embodiments, the target indication information includes a first indication for indicating that a sidelink radio link failure occurs on the third sidelink connection between the relay UE and the second UE.

In some embodiments, the target indication information includes a second indication for indicating that the third sidelink connection between the relay UE and the second UE is released.

In a third aspect of the embodiments of the present disclosure, a connection release apparatus is provided. The apparatus is applicated to a UE, and includes:
a first releasing module, configured to release a first sidelink connection established between the first UE and a second UE via a relay UE in response to triggering a connection release event; in which the connection release event indicates to release a second sidelink connection between the first UE and the relay UE.

In some embodiments, the apparatus further includes:
a second releasing module, configured to release the second sidelink connection between the first UE and the relay UE.

In some embodiments, the second releasing module is configured to instruct, through an access layer of the first UE, an upper layer of the first UE to release the second sidelink connection.

In some embodiments, the first releasing module is configured to transmit a first release parameter to an upper layer of the first UE through an access layer of the first UE; wherein the first release parameter is configured for instructing the upper layer to release the first sidelink connection.

In some embodiments, the first release parameter comprises a preset release cause parameter for indicating an interruption of the second sidelink connection between the first UE and the relay UE.

In some embodiments, the connection release event includes:
the access layer receiving target release indication information from the upper layer; wherein the target release indication information indicates the access layer to release the second sidelink connection.

In some embodiments, the connection release event includes:
a sidelink radio link failure occurring on the second sidelink connection between the first UE and the relay UE.

In some embodiments, the connection release event includes:
receiving target indication information transmitted by the relay UE; wherein the target indication information indicates an interruption of a third sidelink connection between the relay UE and the second UE.

In some embodiments, the target indication information includes a first indication for indicating that a sidelink radio link failure occurs on the third sidelink connection between the relay UE and the second UE.

In some embodiments, the target indication information includes a second indication for indicating that the third sidelink connection between the relay UE and the second UE is released.

In some embodiments, there are a plurality of second UEs, and the connection release event includes:
receiving the target indication information transmitted by the relay UE, and determining that each of sidelink connections between the plurality of second UEs that maintain sidelink connections with the first UE via the relay UE and the relay UE is interrupted according to the target indication information.

In a fourth aspect of the embodiments of the present disclosure, a connection release apparatus is provided. The apparatus is applied to a relay UE, and includes:
a first transmitting module, configured to in a case that a third sidelink connection between the relay UE and a second UE is interrupted, transmit target indication information to a first UE so that the first UE releases a first sidelink connection established between the first UE and the second UE via the relay UE in response to receiving the target indication information, wherein the target indication information indicates an interruption of the third sidelink connection between the relay UE and the second UE.

In some embodiments, the target indication information includes a first indication for indicating that a sidelink radio link failure occurs on the third sidelink connection between the relay UE and the second UE.

In some embodiments, the target indication information includes a second indication for indicating that the third sidelink connection between the relay UE and the second UE is released.

In a fifth aspect of the embodiments of the present disclosure, a connection release apparatus is provided, including:
a processor,
a memory for storing executable instructions of the processor;
in which the processor is configured to perform a connection release method provided in the first aspect of the disclosure.

In a sixth aspect of the embodiments of the present disclosure, a connection release apparatus is provided, including:
a processor,
a memory for storing executable instructions of the processor;
in which the processor is configured to perform a connection release method provided in the second aspect of the disclosure.

In a seventh aspect of the embodiments of the present disclosure, a computer-readable storage medium is provided, in which computer program instructions are stored on the computer-readable storage medium, and when the computer program instructions are executed by a processor, a connection release method provided in the first aspect of the disclosure is implemented.

In an eighth aspect of the embodiments of the present disclosure, a computer-readable storage medium is provided, in which computer program instructions are stored on the computer-readable storage medium, and when the computer program instructions are executed by a processor, a connection release method provided in the second aspect of the disclosure is implemented.

In a ninth aspect of the embodiments of the present disclosure, a chip is provided, including: a processor and an interface; in which the processor is configured to read instructions to perform a connection release method provided in the first aspect of the disclosure.

In a tenth aspect of the embodiments of the present disclosure, a chip is provided, including: a processor and an interface; in which the processor is configured to read instructions to perform a connection release method provided in the second aspect of the disclosure.

The technical solution provided by the embodiments of the present disclosure may include the following beneficial effects. A first UE may release a first sidelink connection established between the first UE and a second UE via a relay UE in response to triggering of a connection release event; in which the connection release event indicates to release a second sidelink connection between the first UE and the relay UE. In this way, when the first UE determines to release the second sidelink connection between the first UE and the relay UE, the first sidelink connection between the first UE and the second UE can be released, so that the first sidelink connection which can no longer be used for communication can be released in time, and resource occupation of the first UE is reduced. In addition, the first UE can establish a new connection with the second UE more quickly based on a service requirement, without waiting for release of an original connection, so that data transmission delay can be avoided and data transmission efficiency can be improved.

It should be understood that the general description above and the detailed description below are illustrative and explanatory only, and do not limit the disclosure.

### BRIEF DESCRIPTION OF THE DRAWINGS

The accompanying drawings, which are incorporated into and form a part of the description, show embodiments consistent with the disclosure, and serve to explain principles of the disclosure together with the description.
FIG. 1 is a schematic diagram illustrating a communication system according to an embodiment.
FIG. 2 is a flowchart illustrating a connection release method according to an embodiment.
FIG. 3 is a flowchart illustrating a connection release method according to an embodiment.
FIG. 4 is a flowchart illustrating a connection release method according to an embodiment.
FIG. 5 is a flowchart illustrating a connection release method according to an embodiment.
FIG. 6 is a block diagram illustrating a connection release apparatus according to an embodiment.
FIG. 7 is a block diagram illustrating a connection release apparatus according to an embodiment.
FIG. 8 is a block diagram illustrating a connection release apparatus according to an embodiment.
FIG. 9 is a block diagram illustrating a connection release apparatus according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

It should be noted that all actions to obtain signals, information or data in the disclosure are carried out under the premise of complying with the corresponding data protection regulations and policies of the country in which they are located, and with the authorization of the owner of the corresponding apparatus.

In the description of the disclosure, terms such as "first", "second", etc., are used to distinguish similar objects and are not necessarily understood as a particular order or sequence. In addition, in the description with reference to the drawings, the same reference numeral in different drawings indicates the same element unless otherwise stated.

In the description of the disclosure, unless otherwise stated, the term "a plurality of" means two or more, and is similar to other quantifiers, "at least one (piece of)", "one or more (pieces of)" or similar expressions refer to any combination of these (pieces of) items, including any combination of single (piece of) item or multiple (pieces of) items. For example, at least one (piece of) a can represent any number of a. For example, one or more (pieces of) of a, b or c can be expressed as: a, b, c, a-b, a-c, b-c, or a-b-c, in which a, b, c can be singular or plural. "And/or" is an association relationship that describes associated objects, indicating that there can be three kinds of relations, for example, A and/or B, can represent: A exists alone, A and B exist at the same time, B exists alone, in which A and B can be singular or plural.

Although operations or steps are described in a particular order in the accompanying drawings of the embodiments of the present disclosure, they shall not be understood as requiring that the operations or steps are performed in the particular or serial order shown, or that all of the operations or steps shown are performed to obtain the desired results. In the embodiments of the present disclosure, these operations or steps can be performed serially; they can also be performed in parallel; or part of these actions or steps can be performed.

The following first introduces an implementation environment of the embodiments of the present disclosure.

The technical solution of the embodiments of the present disclosure can be applied to various communication systems. The communication systems may include one or more of 4G (the 4th Generation) communication systems, 5G (the 5th Generation) communication systems, or other future wireless communication systems (such as 6G). The communication systems may also include one or more of a public land mobile network (PLMN), device-to-device (D2D) communication system, machine to machine (M2M) communication system, an Internet of things (IoT) communication system, a vehicle-to-everything (V2X) communication system, or other communication systems.

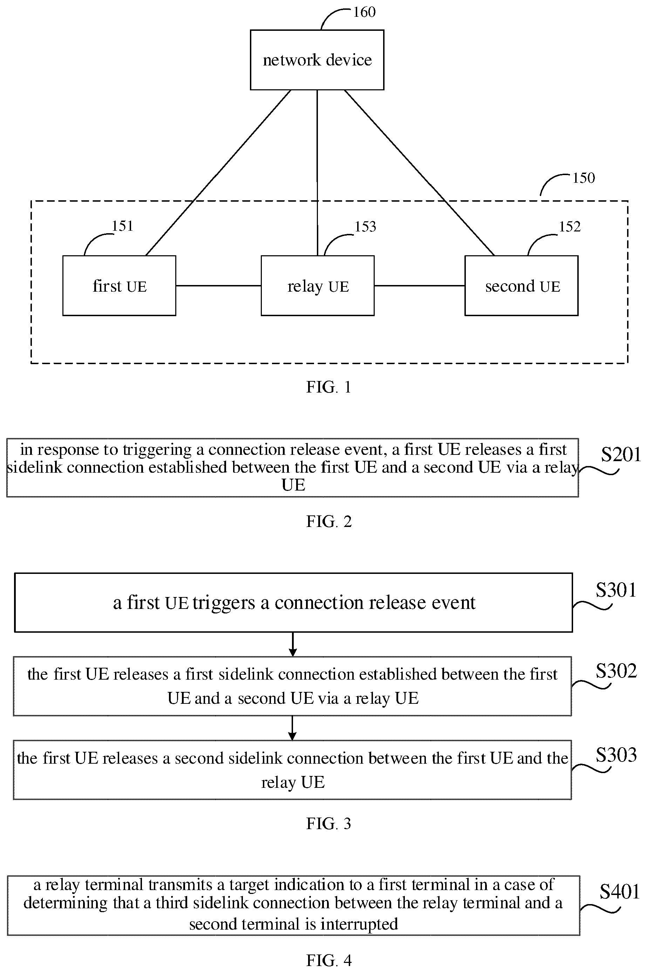

FIG. 1 is a schematic diagram illustrating a communication system according to an embodiment, as shown in FIG. 1, which may include a terminal 150 and a network device 160. The communication system can be used to support 4G network access technologies, such as a long term evolution (LTE) access technology, or 5G network access technologies, such as a new radio access technology (New RAT), or, other future wireless communication technologies. It should be noted that in the communication system, the number of network devices can be one or more and the number of terminals can be one or more. The number of network devices and the number of terminals in the communication system shown in FIG. 1 is only an example, which is not limited in the disclosure.

The network device in FIG. 1 can be used to support terminal access. For example, the network device can be an evolutional Node B (eNB, or eNodeB) in LTE; the network device can also be a next generation Node B (gNB or gNodeB) in a 5G network; the network device can also be an NG radio access network (NG-RAN) device in a 5G network; the network device can also be a base station in a public land mobile network (PLMN) of future evolution, a broadband network gateway (BNG), an aggregation switch, or a non-3GPP (3rd Generation Partnership Project) access device, etc. Optionally, the network device in the embodiments of the present disclosure may include various forms of base stations, such as, macro station, micro base station (also known as small station), relay station, access point, 5G base station or future base station, satellite, transmitting and receiving point (TRP), transmitting point (TP), mobile switching center, and device-to-device (D2D), machine-to-machine (M2M), Internet of things (IoT), vehicle-to-everything (V2X), or other devices that perform functions of a base station in communication, etc., which are not specifically limited in the embodiments of the present disclosure. For convenience of description, in all embodiments of the present disclosure, devices providing a wireless communication function for the terminal are collectively referred to as the network device or base station.

The terminal in FIG. 1 can be an electronic device that provides connectivity for voice or data. For example, the terminal can also be called user equipment (UE), subscriber unit, mobile station, station, terminal, etc. For example, the terminal may include a smartphone, a smart wearable device, a smart speaker, a smart tablet, a wireless modem, a wireless local loop (WLL) station, a personal digital assistant (PDA), and a customer premise equipment (CPE), etc. With the development of wireless communication technology, a device that can access a communication system, communicate with a network device of a communication system, communicate with other objects through a communication system, or communicate directly with another device among two more devices may be the terminal in the embodiments of the present disclosure. For example, a terminal and a car in an intelligent transportation, a household device in a smart home, a power meter reading instrument in a smart grid, a voltage monitoring instrument, an environmental monitoring instrument, a video monitoring instrument in intelligent security network, a cash register, etc. In the embodiments of the present disclosure, the terminal may communicate with the network device. Multiple terminals can also communicate with each other. The terminal may be static or mobile, which is not limited in the disclosure.

In some embodiments, as shown in FIG. 1, the terminal 150 may include a first UE 151, a second UE 152, and a relay UE 153, in which the first UE 151 and the second UE 152 may not be directly connected but perform communication via the relay UE 153. The relay UE 153 may provide a relay function for the communication between the first UE 151 and the second UE 152, such as forwarding communication data, and the communication mode can be called UE to UE (U2U) relay communication, in which the first UE and the second UE can be called a remote UE or remote UE. In the U2U relay communication, the communication mode between multiple UEs may include one or more of the following modes: unicast, multicast, or broadcast. For example, the first UE may transmit sidelink data to the relay UE in the unicast mode, and then the relay UE may forward the sidelink data to the second UE in the unicast mode. In this case, the first UE may be called a source remote UE, and the relay UE may be called a relay UE and the second UE may be called a target remote UE. For example, the second UE may send the sidelink data to the relay UE in the unicast mode, and then the relay UE may forward the sidelink data to the first UE in the unicast mode. In this case, the second UE may be called the source remote UE, and the relay UE may be called the relay UE and the first UE may be called the target remote UE.

It should be noted that in a case that the first UE maintains a unicast connection with the second UE via the relay UE, it may be called a sidelink indirect link, and in a case that the first UE maintains a unicast connection with the second UE directly, it may be called a sidelink direct link.

In this embodiment, the first UE may be directly connected to the network device, the first UE may not be directly connected to the network device but is connected to the network device via the relay UE 153 or other UEs providing the relay function. Similarly, the second UE may be directly connected to the network device, or the second UE may not be directly connected to the network device but may be connected to the network device via the relay UE 153 or other UEs providing the relay function. The disclosure is not limited thereto.

It should also be noted that a physical UE may be used as the relay UE if the relay function is provided. In a case that a physical UE communicates with other UEs via other relay UEs, the physical UE may serve as the above first or second UE. That is, the same physical UE may be used as the relay UE in one U2U link, may also be used as the first UE (such as a data transmitting end) in another U2U link, and may also be used as the second UE (such as a data receiving end) in another U2U link. Of course, one physical UE may only provide the relay function (that is, only used as the relay UE described above), or only provide an ordinary sidelink communication function (that is, only used as the first or second UE described above), which is not limited in the disclosure.

In some embodiments, to realize the U2U communication, the first UE may establish two connections, including: a first sidelink connection established between the first UE and the second UE via the relay UE, and a second sidelink connection between the first UE and the relay UE. The above sidelink connection may be a PC5-RRC (Radio Resource Control) connection established via a PC5 interface. In a case that the sidelink connection is a unicast connection, a sidelink radio link failure may be triggered if one or more of the following RLF (Radio Link Failure) events occur to the unicast connection.

RLF Event 1, a sidelink RLC entity transmits the maximum number of retransmissions to a target UE.

For example, an RRC receives a notification from the sidelink RLC entity and determines that the sidelink RLC entity transmits the maximum number of retransmissions to the target UE. The target UE can be a peer UE in the sidelink connection, such as the second UE or the relay UE.

RLF Event 2, a T400 timer times out.

The T400 timer may be started after the first UE transmits an RRC Reconfiguration Sidelink, and a duration of the T400 timer may be a preset time period.

RLF Event 3, the number of consecutive losses of feedback from the target UE reaches a maximum number.

For example, the RRC receives a notification from the sidelink MAC (Medium Access Control) entity, notifying that the number of consecutive losses of feedback from the target UE reaches the maximum number. The number of consecutive losses of feedback may be the number of consecutive HARQ DTX (Discontinuous Transmissions). Similarly, the target UE may be the peer UE in the sidelink connection, such as the second UE or the relay UE.

RLF Event 4, integrity check of a sidelink signaling bearer fails.

The sidelink signaling bearer may include an SL-SRB2 and/or an SL-SRB3. For example, the RLF event 4 may include the RRC receiving a notification of the integrity check failure of the SL-SRB2 or SL-SRB3 from a sidelink PDCP (Packet Data Convergence Protocol) entity.

After triggering a sidelink radio link failure, the first UE may release the sidelink connection where the sidelink radio link failure occurred.

In the related technology, in a case that the sidelink connection between the first UE and the relay UE is released, the first UE cannot continue to communicate with the second UE via the relay UE, but the sidelink connection between the first UE and the second UE is not actively released, but remains, which will occupy resources of the first UE and lead to that the first UE cannot establish a new connection with the second UE, resulting in data transmission delay.

To solve the above problems, the present disclosure provides a connection release method and apparatus, a storage medium and a chip.

FIG. 2 shows a flowchart of a connection release method according to an embodiment. The method may be applied to a first UE of a communication system. As shown in FIG. 2, the method may include the following steps.

At step S201, in response to triggering a connection release event, the first UE releases a first sidelink connection established between the first UE and a second UE via a relay UE.

The connection release event is used for indicating to release a second sidelink connection between the first UE and the relay UE.

For example, the first UE may perform U2U communication with the second UE via the relay UE. For performing the U2U communication, the first UE may establish the second sidelink connection with the relay UE, and establish the first sidelink connection with the second UE via the relay UE. In this way, the first sidelink connection may be released in a case that a connection release event indicating to release the second sidelink connection is triggered, thereby avoiding resource waste due to the first UE maintaining an invalid first sidelink connection after the second sidelink connection is released.

It should be noted that both the first sidelink connection and the second sidelink connection may be the PC5-RRC connection.

In some embodiments, in response to triggering the connection release event, the first UE may first determine the first sidelink connection established between the first UE and the second UE via the relay UE, and then release the first sidelink connection.

In some embodiments, there may be one or more second UEs. For example, the first UE may perform the U2U communication with multiple second UEs via the same relay UE, so that in response to triggering the connection release event, the first UE may determine multiple first sidelink connections established between the first UE and the multiple second UEs via the relay UE, and release the first sidelink connections. In other words, in a case that the first UE determines to release the second sidelink connection between the first UE and the relay UE, the first UE may release multiple first sidelink connections via the relay UE.

Using the above method, the first UE may release the first sidelink connection established between the first UE and the second UE via the relay UE in response to triggering the connection release event, in which, the connection release event is used for indicating to release the second sidelink connection between the first UE and the relay UE. In this way, in a case that the first UE determines to release the second sidelink connection between the first UE and the relay UE, the first sidelink connection between the first UE and the second UE may be released, so that the first sidelink connection that cannot be used for communication may be released in time, thereby reducing the resource occupation of the first UE. In addition, the first UE may establish a new connection with the second UE more quickly based on a service requirement without waiting for release of an original connection, thus avoiding data transmission delay and improving data transmission efficiency.

FIG. 3 shows a flowchart of another connection release method according to an embodiment. As shown in FIG. 3, the method may include the following steps.

At step S301, a first UE triggers a connection release event.

The connection release event is used for indicating to release a second sidelink connection between the first UE and a relay UE.

For example, the first UE may trigger the connection release event in a case that the connection release event occurs. For example, the connection release event may be triggered in a case of receiving an indication to release the second sidelink connection.

At step S302, the first UE releases a first sidelink connection established between the first UE and a second UE via the relay UE.

In some embodiments, in response to triggering the connection release event, the first UE may first determine the first sidelink connection established between the first UE and the second UE via the relay UE, and then release the first sidelink connection.

In some embodiments, the first UE may first transmit a first connection release request (Disconnect Request) message to the second UE, and release a resource associated with the first sidelink connection in a case of receiving a first connection release response (Disconnect Response) message transmitted by the second UE in response to the first connection release request.

In some other embodiments, the first UE may first transmit the first connection release request message to the second UE, and release the resource associated with the first sidelink connection in a case that the first connection release response message transmitted by the second UE in response to the first connection release request is not received within a preset time period.

In some other embodiments, the first UE may directly release the resource associated with the first sidelink connection.

At step S303, the first UE releases the second sidelink connection between the first UE and the relay UE.

In some embodiments, the first UE may first transmit a second connection release request (Disconnect Request) message to the relay UE, and then release a resource associated with the second sidelink connection in a case of receiving a second connection release (Disconnect Response) response message transmitted by the relay UE in response to the second connection release request.

In some other embodiments, the first UE may first transmit the second connection release request message to the relay UE, and release the resource associated with the second sidelink connection in a case that the second connection release response message transmitted by the relay UE in response to the second connection release request is not received within a preset time period.

In some other embodiments, the first UE may directly release the resource associated with the second sidelink connection.

In this way, the first UE can release both the first sidelink connection and the second sidelink connection to avoid resource waste.

In the embodiments of the present disclosure, the above steps S302 and S303 may be executed in any order, as exemplified below.

In some embodiments, the first UE may first perform a step of releasing the first sidelink connection and then a step of releasing the second sidelink connection.

In some other embodiments, the first UE may first perform the step of releasing the second sidelink connection and then the step of releasing the first sidelink connection.

In some other embodiments, the first UE may perform the step of releasing the first sidelink connection and the step of releasing the second sidelink connection simultaneously.

For example, an access layer of the first UE may instruct an upper layer to release the first sidelink connection and the second sidelink connection simultaneously.

In some other embodiments, the first UE may first perform the step of releasing the first sidelink connection, and then perform the step of releasing the second sidelink connection when it is determined that the first sidelink connection has been released.

It should be noted that since the first sidelink connection is established between the first UE and the second UE via the relay UE, the communication depends on the second sidelink connection. The step of releasing the first sidelink connection is performed first, in this case the first connection release request message may be transmitted to the second UE via the relay UE so that the second UE releases the sidelink connection with the first UE, and then the step of releasing the second sidelink connection is performed after determining that the first sidelink connection is released. For example, the access layer of the first UE may first instruct the upper layer to release the first sidelink connection, and then instruct the upper layer to release the second sidelink connection in a case of determining that the first sidelink connection has been released (such as receiving the first release success indication from the upper layer).

In some embodiments of the present disclosure, the first UE may include the access layer and the upper layer (the upper layer may also be referred to as a non-access layer).

In the above step S302, the first UE may instruct the upper layer through the access layer to release the first sidelink connection.

For example, the first UE may transmit a first release parameter to the upper layer through the access layer; and the first release parameter is used to instruct the upper layer to release the first sidelink connection. In response to receiving the first release parameter, the upper layer releases the first sidelink connection. For example, the upper layer may transmit a connection release request (Disconnect Request) message to the second UE and release the resource associated with the first sidelink connection.

The first release parameter may be transmitted in various ways. For example, the access layer may transmit the first release message to the upper layer, in which the first release parameter is carried in the first release message. For example, the first release parameter may be a preset parameter in a memory, and the access layer may set the value of the first release parameter to a first preset value in order to instruct the upper layer to release the first sidelink connection.

In some embodiments, the first release parameter may include a preset release cause parameter, and the preset release cause parameter is used to indicate an interruption of the second sidelink connection between the first UE and the relay UE. For example, the preset release cause parameter can be a relay link interruption.

It should be noted that the meaning of interruption of the second sidelink connection may include that the second sidelink connection has been interrupted or will be interrupted soon. For example, in a case that before releasing the first sidelink connection, the first UE releases the second sidelink connection in response to the above connection release event being triggered, it may be determined that the second sidelink connection has been interrupted. Conversely, in a case that before releasing the first sidelink connection, the first UE has triggered the above connection release event and determined to release the second sidelink connection, but has not performed the step of releasing the first sidelink connection, it may be determined that the second sidelink connection is about to be interrupted. Regardless of whether the second sidelink connection has been interrupted or is about to be interrupted, the preset release cause parameter may indicate the interruption of the second sidelink connection.

Similarly, in the step S303, the first UE may also instruct the upper level through the access layer to release the second sidelink connection.

In this way, the first UE may release the first sidelink link through the cooperation of the access layer and the upper layer.

In some embodiments of the present disclosure, the above connection release event may include one or more of the following events.

Connection release event 1, the access layer of the first UE receives target release indication information from the upper layer.

The target release indication information may be used to instruct the access layer to release the second sidelink connection.

For example, the first UE may release the first sidelink connection in a case that it receives the target release indication information from the upper layer.

For example, the first sidelink connection established between the first UE and the second UE via the relay UE may be determined first, and then the first sidelink connection may be released.

In some embodiments, since the target release indication information is transmitted from the upper layer, it is unnecessary for the access layer of the first UE to instruct the upper level to release the second sidelink connection.

In this way, the first UE may release the first sidelink connection based on target release indication information from the upper layer.

Connection release event 2, a sidelink radio link failure occurs on the second sidelink connection between the first UE and the relay UE.

For example, the first UE may release the first sidelink connection in a case that it determines that the sidelink radio link failure occurs on the second sidelink connection.

Similarly, the first sidelink connection established between the first UE and the second UE via the relay UE may be determined first, and then the first sidelink connection is released.

In some embodiments, in a case that a preset RLF event occurs on the second sidelink connection, it may be determined that the sidelink radio link failure occurs on the second sidelink connection. The preset RLF event may include any one or more of the foregoing RLF events 1 to 4 in the disclosure, which is not described here.

Connection release event 3, target indication information transmitted by the relay UE is received.

The target indication information may be configured to indicate an interruption of a third sidelink connection between the relay UE and the second UE.

For example, the first UE may release the first sidelink connection in a case that it receives the target indication information transmitted by the relay UE.

Similarly, the first sidelink connection established between the first UE and the second UE via the relay UE may be determined first, and then the first sidelink connection is released.

In some embodiments, the relay UE may transmit the target indication information to the first UE in a case that it is determined that the third sidelink connection between the relay UE and the second UE is interrupted.

Connection release event 4, the target indication information transmitted by the relay UE is received, and it is determined, according to the target indication information, that each of sidelink connections between the plurality of second UEs that maintain sidelink connections with the first UE via the relay UE and the relay UE is interrupted.

Similarly, the target indication information may be configured to indicate an interruption of a third sidelink connection between the relay UE and the second UE.

For example, there are a plurality of second UEs that maintain sidelink connections with the first UE via the relay UE. The first UE may determine the first sidelink connection established between the first UE and the second UE via the relay UE and release the first sidelink connection in a case that the first UE receives the target indication information transmitted by the relay UE, and determines that each of sidelink connections between the plurality of second UEs that maintain sidelink connections with the first UE via the relay UE and the relay UE is interrupted according to the target indication information.

In some embodiments, the first UE may maintain the sidelink connections with N second UEs (N being a positive integer greater than or equal to 1) via the relay UE, and the above target indication information may be configured to indicate interruption of the third sidelink connections between the relay UE and one or more of the second UEs.

In a case that the first UE determines that all the third sidelink connections of the above N second UEs are interrupted based on the target indication information received, the connection release event is triggered (that is, the second sidelink connection is determined to be released). In this case, N first sidelink connections may be released and the second sidelink connection between the first UE and the relay UE is released.

In a case that the first UE determines that third sidelink connections between M second UEs and the relay UE are interrupted based on the target indication information, in which M is less than N, the second sidelink connection between the first UE and the relay UE can be maintained, and only the first sidelink connections between the first UE and M second UEs indicated in the target indication information may be released.

In this way, in a case that the first UE establishes sidelink connections with the plurality of second UEs via the relay UE, the sidelink connections may be managed reliably, and invalid sidelink connections may be released in time.

It should be noted that the meaning of interruption of the third sidelink connection may include that the third sidelink connection has been interrupted or is about to be interrupted. For example, the relay UE may transmit the target indication information releasing the third sidelink connection, and the target indication information is configured to indicate that the third sidelink connection has been interrupted. For another example, the relay UE may transmit the above target indication information to the first UE in a case that it has determined to release the third sidelink connection but has not yet performed the release step, and the target indication information is configured to indicate that the third sidelink connection is about to be interrupted.

In some embodiments, the target indication information may include a first indication, in which the first indication is configured to indicate that a sidelink radio link failure occurs on the third sidelink connection between the relay UE and the second UE.

For example, the relay UE may determine that the sidelink radio link failure occurs on the third sidelink connection in the case that a preset RLF event occurs on the third sidelink connection. The preset RLF event may include any one or more of the foregoing RLF events 1 to 4 in the disclosure, which is not described here.

In some other embodiments, the target indication information includes a second indication for indicating that the third sidelink connection between the relay UE and the second UE is released.

For example, the relay UE may release the second sidelink connection on its own initiative, or may release the third sidelink connection based on a request from the second UE, or may release the third sidelink connection based on an indication from a network device, or may release the third sidelink connection based on a command triggered by the user. The manner in which the relay UE triggers the release of the third sidelink connection is not limited in the present disclosure.

It should also be noted that the meaning of the third sidelink connection being released may include that the third sidelink connection has been released or is about to be released. For example, the relay UE may transmit the second indication after releasing the third sidelink connection, in which the second indication is configured to indicate that the third sidelink connection has been released. For example, the relay UE may transmit the above target indication information to the first UE in a case that it has determined to release the third sidelink connection but has not yet performed the release step, in which the target indication information is configured to indicate that the third sidelink connection is about to be released.

It should be understood that the target indication information may include only the first indication, or only the second indication, or may include both the first indication and the second indication, which is not limited in the present disclosure.

In this way, in different scenarios, the first UE may release the first sidelink connection in time based on different indications of the relay UE.

FIG. 4 shows a flowchart of a connection release method based on an embodiment. The method may be performed by a relay UE in the above communication system. As shown in FIG. 4, the method includes the following steps.

At step S401, the relay UE transmits target indication information to a first UE in a case that it determines that a third sidelink connection between the relay UE and a second UE is interrupted.

The third sidelink connection is a sidelink connection between the relay UE and the second UE.

In this way, the first UE may release a first sidelink connection in response to receiving the target indication information, in which the target indication information is configured to indicate an interruption of the third sidelink connection between the relay UE and the second UE.

It should be noted that the way in which the first UE releases the first sidelink connection may be referred to the description of the previous embodiments in the disclosure and will not be described here.

The above target indication information may include a first indication and/or a second indication, as exemplified below.

In some embodiments, the target indication information may include the first indication for indicating that a sidelink radio link failure occurs on a third sidelink connection between the relay UE and the second UE.

For example, the relay UE may determine that the sidelink radio link failure occurs on the third sidelink connection in the case that a preset RLF event occurs on the third sidelink connection. The preset RLF event may include any one or more of the foregoing RLF events 1 to 4 in the disclosure, which is not described here.

In some other embodiments, the target indication information includes the second indication for indicating that the third sidelink connection between the relay UE and the second UE is released.

For example, the relay UE may release the second sidelink connection on its own initiative, or may release the third sidelink connection based on a request from the second UE, or may release the third sidelink connection based on an indication from a network device, or may release the third sidelink connection based on a command triggered by the user. The manner in which the relay UE triggers the release of the third sidelink connection is not limited in the present disclosure.

It should also be noted that the meaning of the third sidelink connection being released may include that the third sidelink connection has been released or is about to be released. For example, the relay UE may transmit the second indication after releasing the third sidelink connection, in which the second indication is configured to indicate that the third sidelink connection has been released. For another example, the relay UE may transmit the above target indication information to the first UE in a case that it has determined to release the third sidelink connection but has not yet performed the release step, in which the target indication information is configured to indicate that the third sidelink connection is about to be released.

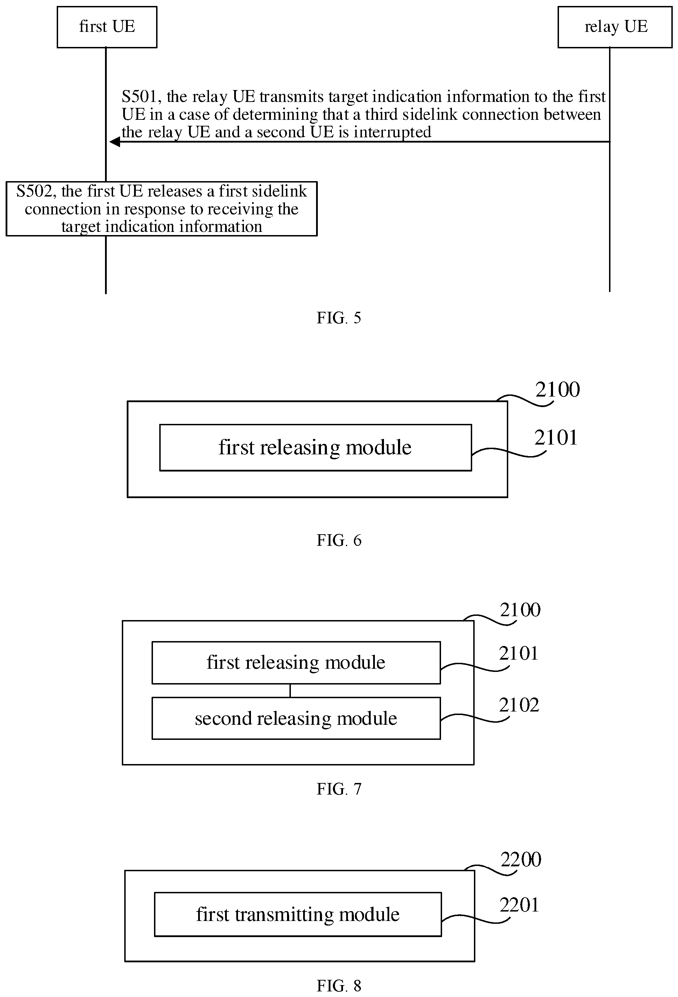

FIG. 5 shows a flowchart of a connection release method based on an embodiment. As shown in FIG. 5, the method includes the following steps.

At step S501, a relay UE transmits target indication information to a first UE in a case that it determines that a third sidelink connection between the relay UE and a second UE is interrupted.

The third sidelink connection is a sidelink connection between the relay UE and the second UE. The target indication information is configured to indicate an interruption of the third sidelink connection.

At step S502, the first UE releases a first sidelink connection in response to receiving the target indication information.

The first sidelink connection is a sidelink connection between the first UE and the second UE.

For example, the first UE may determine the first sidelink connection established between the first UE and the second UE via the relay UE and release the first sidelink connection in a case that the first UE receives the target indication transmitted by the relay UE.

The above target indication information may include a first indication and/or a second indication, as exemplified below.

In some embodiments, the relay UE may transmit the first indication to the first UE in a case that it is determined that a sidelink radio link failure occurs on the third sidelink connection. The first UE may release the first sidelink connection in response to receiving the first indication. The first indication may be configured to indicate that the sidelink radio link failure occurs on the third sidelink connection between the relay UE and the second UE.

In some embodiments, the relay UE may transmit the second indication to the first UE in a case that it is determined that the third sidelink connection is released. The first UE may release the first sidelink connection in response to receiving the second indication. The second indication may be configured to indicate that the third sidelink connection between the relay UE and the second UE is released

In another implementation of the embodiments, the first UE may release the first sidelink connection and the second sidelink connection in response to receiving the target indication information, in which the second sidelink connection is a sidelink connection between the first UE and the relay UE.

It should be noted that the specific ways for the first UE to release the first sidelink connection and release the second sidelink connection may be referred to the descriptions in the previous embodiments of the disclosure and will not be described here.

Using the above method, the relay UE may transmit the target indication information to the first UE in a case of determining that the third sidelink connection between the relay UE and the second UE is interrupted, and the first UE may release the first sidelink connection in response to receiving the target indication information. In this way, the first UE may release the first sidelink connection that cannot be used for communicate in time, thereby reducing the resource occupation of the first UE. In addition, the first UE may establish a new connection with the second UE more quickly based on a service requirement without waiting for the release of the original connection, thus avoiding data transmission delay and improving data transmission efficiency.

FIG. 6 is a block diagram of a connection release apparatus 2100 according to an embodiment. The apparatus may be applied in a first UE. As shown in FIG. 6, the apparatus 2100 may include a first releasing module 2101.

The first releasing module 2101 is configured to release a first sidelink connection established between the first UE and a second UE via a relay UE in response to triggering a connection release event; in which the connection release event indicates to release a second sidelink connection between the first UE and the relay UE.

FIG. 7 is a block diagram of a connection release apparatus 2100 according to an embodiment. As shown in FIG. 7, the apparatus 2100 may further include a second releasing module 2102.

The second releasing module 2102 is configured to release a second sidelink connection between the first UE and the relay UE.

In some embodiments, the second releasing module 2102 is configured to instruct, through an access layer of the first UE, an upper layer of the first UE to release the second sidelink connection.

In some embodiments, the first releasing module 2101 is configured to transmit a first release parameter to an upper layer of the first UE through an access layer of the first UE; in which, the first release parameter is configured for instructing the upper layer to release the first sidelink connection.

In some embodiments, the first release parameter includes a preset release cause parameter configured to indicate an interruption of the second sidelink connection between the first UE and the relay UE.

In some embodiments, the connection release event includes:
the access layer receiving target release indication information from the upper layer; in which the target release indication information is configured to indicate the access layer to release the second sidelink connection.

In some embodiments, the connection release event includes:
a sidelink radio link failure occurring on the second sidelink connection between the first UE and the relay UE.

In some embodiments, the connection release event includes:
receiving target indication information transmitted by the relay UE; in which the target indication information is configured to indicate an interruption of a third sidelink connection between the relay UE and the second UE.

In some embodiments, the target indication information includes a first indication for indicating that a sidelink radio link failure occurs on the third sidelink connection between the relay UE and the second UE.

In some embodiments, the target indication information comprises a second indication for indicating that the third sidelink connection between the relay UE and the second UE is released.

In some embodiments, there are a plurality of second UEs, and the connection release event includes:
receiving the target indication information transmitted by the relay UE, and determining that each of sidelink connections between the plurality of second UEs that maintain sidelink connections with the first UE via the relay UE and the relay UE is interrupted according to the target indication information.

FIG. 8 is a block diagram of a connection release apparatus 2200 according to an embodiment. The apparatus may be applied in a relay UE. As shown in FIG. 8, the apparatus 2200 may include a first transmitting module 2201.

The first transmitting module 2201 is configured to in a case that a third sidelink connection between the relay UE and a second UE is interrupted, transmit target indication information to a first UE so that the first UE releases a first sidelink connection established between the first UE and the second UE via the relay UE in response to receiving the target indication information, in which the target indication information indicates an interruption of the third sidelink connection between the relay UE and the second UE.

In some embodiments, the target indication information includes a first indication for indicating that a sidelink radio link failure occurs on the third sidelink connection between the relay UE and the second UE.

In some embodiments, the target indication information includes a second indication for indicating that the third sidelink connection between the relay UE and the second UE is released.

With respect to the apparatuses in the above embodiments, the specific manner in which each module performs an operation has been described in detail in the embodiments related to the method and will not be elaborated herein.

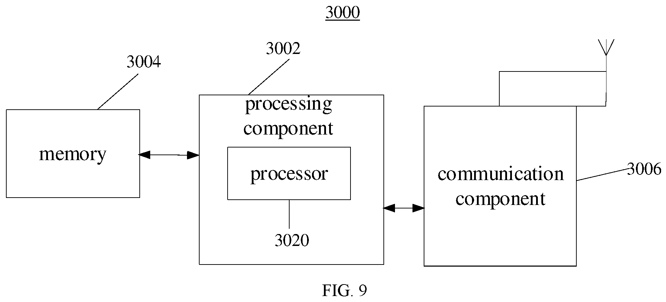

FIG. 9 is a block diagram of a connection release apparatus according to an embodiment. The connection release apparatus 3000 may be either a UE in the communication system shown in FIG. 1 (for example, a first UE, a second UE, or a relay UE), or a network device in the communication system.

Referring to FIG. 9, the apparatus 3000 may include one or more of the following components: a processing component 3002, a memory 3004, and a communication component 3006.

The processing component 3002 may be configured to control the overall operations of the apparatus 3000, such as operations associated with display, telephone calls, data communications, camera operations and recording operations. The processing component 3002 may include one or more processors 3020 to execute instructions to complete all or part of the steps of the connection release method described above. In addition, the processing component 3002 may include one or more modules to facilitate interaction between the processing component 3002 and other components. For example, the processing component 3002 may include a multimedia module to facilitate interaction between the multimedia component and the processing component 3002.

The memory 3004 is configured to store various types of data to support operations on the apparatus 3000. Examples of such data include instructions for any application or method operating on the apparatus 3000, contact data, phone book data, a message, a picture, a video, etc. The memory 3004 may be implemented by any type of volatile or non-volatile memory device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or a CD.

The communication component 3006 is configured to facilitate wired or wireless communication between the apparatus 3000 and other apparatuses. The apparatus 3000 can access a wireless network based on communication standards, such as Wi-Fi, 2G, 3G, 4G, 5G, 6G, NB-IOT, eMTC, etc., or a combination thereof. In an embodiment, the communication component 3006 receives broadcast signals or broadcast-related information from an external broadcast management system through a broadcast channel. In an embodiment, the communication component 3006 also includes a near-field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the apparatus 3000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, which may be used to perform the connection release method described above.

The apparatus 3000 may be an independent electronic apparatus or part of an independent electronic device. For example, in an embodiment, the electronic device may be an integrated circuit (IC) or a chip, in which the IC may be a single IC or a collection of ICs; and the chip may include, but is not limited to, the following categories: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC), etc. The above integrated circuit or chip may be used to execute executable instructions (or codes) to implement the above connection release method. The executable instructions can be stored in the integrated circuit or chip, or can be obtained from other devices, for example the integrated circuit or chip includes a processor, a memory, and an interface for communicating with other devices. The executable instructions can be stored in the processor, and the connection release method can be realized when the executable instructions are executed by the processor. Alternatively, the integrated circuit or chip may receive executable instructions through the interface and transmit them to the processor for execution to achieve the connection release method described above.

In an embodiment, the disclosure also provides a computer-readable storage medium in which computer program instructions are stored on the computer-readable storage medium, when the computer program instructions are executed by a processor, the steps of the connection release method provided by the disclosure are implemented. For example, the computer-readable storage medium may be a non-temporary computer-readable storage medium that includes the instructions, such as the memory 3004 that includes the instructions that may be executed by the processor 3020 of the apparatus 3000 to complete the connection release method. For example, the non-temporary computer-readable storage medium may be ROM, random access memory (RAM), CD-ROM, magnetic tape, floppy disk, and optical data storage device.

In another embodiment, a computer program product is also provided. The computer program product contains a computer program that can be executed by a programmable device, in which the computer program has a portion of code for executing the connection release method when executed by the programmable device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A connection release method, performed by a first user equipment (UE), comprising:
releasing a first sidelink connection established between the first UE and a second UE via a relay UE, in response to triggering a connection release event; wherein the connection release event indicates to release a second sidelink connection between the first UE and the relay UE.

2. The method according to claim 1, further comprising:
releasing the second sidelink connection between the first UE and the relay UE.

3. The method according to claim 2, wherein releasing the second sidelink connection between the first UE and the relay UE comprises:
instructing, through an access layer of the first UE, an upper layer of the first UE to release the second sidelink connection.

4. The method according to claim 1, wherein releasing the first sidelink connection established between the first UE and the second UE via the relay UE comprises:
transmitting a first release parameter to an upper layer of the first UE through an access layer of the first UE; wherein the first release parameter instructs the upper layer to release the first sidelink connection.

5. The method according to claim 4, wherein
the first release parameter comprises a preset release cause parameter for indicating an interruption of the second sidelink connection between the first UE and the relay UE.

6. The method according to claim 4 or 5, wherein the connection release event comprises:
the access layer receiving target release indication information from the upper layer; wherein the target release indication information indicates the access layer to release the second sidelink connection.

7. The method according to any one of claims 1 to 5, wherein the connection release event comprises:
a sidelink radio link failure occurring on the second sidelink connection between the first UE and the relay UE.

8. The method according to any one of claims 1 to 5, wherein the connection release event comprises:
the first UE receiving target indication information transmitted by the relay UE; wherein the target indication information indicates an interruption of a third sidelink connection between the relay UE and the second UE.

9. The method according to claim 8, wherein
the target indication information comprises a first indication for indicating that a sidelink radio link failure occurs on the third sidelink connection between the relay UE and the second UE.

10. The method according to claim 8, wherein
the target indication information comprises a second indication for indicating that the third sidelink connection between the relay UE and the second UE is released.

11. The method according to claim 8, wherein there are a plurality of second UEs, and the connection release event comprises:
the first UE receiving the target indication information transmitted by the relay UE, and determining that each of sidelink connections between the plurality of second UEs that maintain sidelink connections with the first UE via the relay UE and the relay UE is interrupted according to the target indication information.

12. A connection release method, performed by a relay user equipment (UE), comprising:
in a case that a third sidelink connection between the relay UE and a second UE is interrupted, transmitting target indication information to a first UE so that the first UE releases a first sidelink connection established between the first UE and the second UE via the relay UE in response to receiving the target indication information, wherein the target indication information indicates an interruption of the third sidelink connection between the relay UE and the second UE.

13. The method according to claim 12, wherein
the target indication information comprises a first indication for indicating that a sidelink radio link failure occurs on the third sidelink connection between the relay UE and the second UE.

14. The method according to claim 12, wherein
the target indication information comprises a second indication for indicating that the third sidelink connection between the relay UE and the second UE is released.

15. A connection release apparatus, applied to a first user equipment (UE), comprising:
a first releasing module, configured to release a first sidelink connection established between the first UE and a second UE via a relay UE in response to triggering a connection release event; wherein the connection release event indicates to release a second sidelink connection between the first UE and the relay UE.

16. A connection release apparatus, applied to a relay user equipment (UE), comprising:
a first transmitting module, configured to in a case that a third sidelink connection between the relay UE and a second UE is interrupted, transmit target indication information to a first UE so that the first UE releases a first sidelink connection established between the first UE and the second UE via the relay UE in response to receiving the target indication information, wherein the target indication information indicates an interruption of the third sidelink connection between the relay UE and the second UE.

17. A connection release apparatus, comprising:
a processor,
a memory for storing executable instructions of the processor;
wherein the processor is configured to perform a method according to any one of claims 1 to 11 or a method according to any one of claims 12 to 14.

18. A computer-readable storage medium, wherein computer program instructions are stored on the computer-readable storage medium, and when the computer program instructions are executed by a processor, a method according to any one of claims 1 to 11 is implemented, or a method according to any one of claims 12 to 14 is implemented.

19. A chip, comprising:
a processor and an interface; wherein the processor is configured to read instructions to perform a method according to any one of claims 1 to 11, or the processor is configured to read instructions to perform a method according to any one of claims 12 to 14.
